# EUROPÄISCHE PATENTSCHRIFT

(11) **EP 0 734 974 B1**
(45) Veröffentlichungstag und Bekanntmachung des Hinweises auf die Patenterteilung: **22.07.1998**
(21) Anmeldenummer: 96250072.4
(22) Anmeldetag: 29.03.1996
(51) Int. Cl.: B65G 1/04, B66F 9/14

(54) **Lagerregal**
Shelf
Rayonnage

(30) Priorität: 31.03.1995 DE 19513179
(43) Veröffentlichungstag der Anmeldung: 02.10.1996
(73) Patentinhaber: Bellheimer Metallwerk GmbH, D-76752 Bellheim (DE)
(72) Erfinder: Siegler, Adrian, Dipl.-Ing., 76756 Bellheim (DE); Bouché, Norbert, Dipl.-Ing., 76773 Kuhardt (DE)
(74) Vertreter: Böning, Manfred, Dr.-Ing.

(56) Entgegenhaltungen:
- DE-A- 3 336 109

## Beschreibung

Die Erfindung betrifft ein Lagerregal mit einer Vielzahl von im Abstand A voneinander übereinander angeordneten Paaren von Stützen für Lastträger, die mit Hilfe einer vertikal verfahrbaren Ein- und Auslagervorrichtung von mindestens einer Beschickungs- und Entnahmestelle zu Lagerplätzen des Regales überführbar oder von diesen zur Beschickungs- und Entnahmestelle beförderbar sind.

Ein Lagerregal der in Betracht gezogenen Art ist aus der DE 42 33 688 A 1 bekannt. Das bekannte Regal weist zwei sich gegenüberliegende Lagerplatzsäulen auf, zwischen denen in einem Schacht auf- und abbewegbar eine Ein- und Auslagervorrichtung geführt ist, mit deren Hilfe Lastträger aus dem Regal auslager- bzw. in das Regal einlagerbar sind, wobei die Auslagervorrichtung wie aus der DE 42 33 690 C 2 bekannt über Mitnehmer verfügt, durch die sich die Lastträger sowohl im Bereich der Lagerplätze als auch im Bereich der Beschickungs- und Entnahmestelle horizontal hin und her verschieben lassen. Bei dem bekannten Lagerregal werden die Stützen von in die Seitenwände eines Gehäuses einhängbaren Schienenpaaren gebildet, wobei der Mindestabstand zwischen den aufeinanderfolgenden Schienenpaaren durch ein Lochraster mit einer vorgegebenen Teilung bestimmt ist.

In der Praxis sind dem Mindestabstand zwischen aufeinanderfolgenden Stützen wirtschaftliche Grenzen gesetzt. Stützabstände von weniger als 70 bis 80 mm sind vor allem dann unzweckmäßig, wenn die Stützen aus Stegen bestehen, die von Ausstülpungen der Seitenwände des Regales gebildet werden. Die vorstehend angedeuteten Gegebenheiten vermögen insbesondere dann nicht zu befriedigen, wenn auf den Lastträgern beispielsweise Kleinteile gelagert werden sollen, deren Höhe nur 20 bis 30 mm beträgt. Um das Volumen der Lagerplätze in derartigen Fällen gleichwohl halbwegs vernünftig ausnutzen zu können, wurden Lastträger mit mehreren in einem Gehäuse übereinander angeordneten Schubladen entwickelt. Derartige Lastträger sind allerdings nicht nur teuer, sondern lassen auch bezüglich ihrer Handhabung zu wünschen übrig.

Der Erfindung liegt die Aufgabe zugrunde, ein Lagerregal der in Betracht gezogenen Gattung so auszubilden, daß einem Lagerplatz mehr als nur ein Lastträger zugeordnet werden kann, und daS ein problemloser Zugriff zu demjenigen der an einem Lagerplatz gelagerten Lastträger möglich ist, auf dem die gewünschten Teile abgelegt sind. Diese Aufgabe wird bei einem einschlägigen Lagerregal erfindungsgemäß dadurch gelöst, daS es mit Lastträgerstapeln ausgerüstet ist, die mehrere übereinander angeordnete Lastträger aufweisen, daS die Ein- und Auslagervorrichtung mit einem Hubmechanismus versehen ist, durch den bei Bedarf mindestens ein Lastträger aus einer Position, in der er sich auf einem unterhalb von ihm gelegenen Lastträger des Lastträgerstapels abstützt, in eine Position überführbar ist, in der er einen Abstand a von letzterem einnimmt, und daß die unterhalb des durch den Hubmechanismus angehobenen Lastträgers angeordneten Lastträger unabhängig von dem jeweils angehobenen Lastträger und sich gegebenenfalls weiteren auf diesem abstützenden Lastträgern mittels der Ein- und Auslagervorrichtung durch eine Horizontalbewegung in den Bereich der Beschickungs- und Entnahmestelle oder von dieser auf die Ein- und Auslagervorrichtung überführbar sind.

Bei dem erfindungsgemäßen Lagerregal werden die Lastträgerstapel wie bekannte einzelne Lastträger durch die Ein- und Auslagervorrichtung dem jeweiligen Lagerplatz entnommen und in den Bereich der Beschickungs- und Entnahmestelle überführt oder aber aus diesem Bereich zum jeweiligen Lagerplatz befördert. Der Vorteil des erfindungsgemäßen Lagerregals besteht darin, daß im Bereich der Beschickungs- und Entnahmestelle Vorsorge dafür getroffen ist, daß im Zuge der Verlagerung der Lasträger von der Ein- und Auslagervorrichtung zur Beschickungs- und Entnahmestelle jeweils der Lastträger in eine Zugriffsposition überführt wird, aus dem Lagergut entnommen oder in den Lagergut abgelegt werden soll. Besteht mit anderen Worten Interesse an Lagergut im obersten Lastträger eines Lastträgerstapels, so wird der ganze Lastträgerstapel horizontal zur Beschickungs- und Entnahmestelle verlagert, besteht hingegen Interesse an Lagergut im untersten Lastträger eines Lastträgerstapels, so wird nur dieser Lastträger einer Horizontalbewegung unterworfen.

Als besonders zweckmäßig erweist sich eine Lösung, bei der jeweils nur zwei übereinander angeordnete Lastträger einen Lastträgerstapel bilden. Die Einfachheit einer solchen Ausführungsform erleichtert das Nachrüsten bereits im Einsatz befindlicher bekannter Lagerregale und ermöglicht so mit geringem Aufwand eine Verdoppelung ihrer Lagerfläche.

Weitere Einzelheiten und Merkmale der Erfindung ergeben sich aus den Unteransprüchen und der nachstehenden Beschreibung einer in der beigefügten Zeichnung dargestellten Ausführungsform der Erfindung. Es zeigen:
- Fig. 1: teilweise im Schnitt die Gesamtansicht eines Lagerregales,
- Fig. 2: Einzelheiten eines Abschnittes einer Seitenwand des Regales gemäß Fig. 1,
- Fig. 3: Einzelheiten der Ein- und Auslagervorrichtung des Regales gemäß Fig. 1,
- Fig. 4: die Vorderansicht der Lastträger eines aus Lastträgern bestehenden Lastträgerstapels des Regales gemäß Fig. 1 in einer 1. Position,
- Fig. 5: die Vorderansicht der Lastträger des Lastträgerstapels des Regales gemäß Fig. 1 in einer 2. Position,
- Fig. 6: das Auslagern eines Lastträgerstapels zwecks Entnahme von Lagergut aus dem obersten Lastträger des Stapels
- Fig. 7: das Ausfahren des unteren Lastträgers eines Lastträgerstapels zwecks Entnahme von Lagergut aus dem unteren Lastträger und
- Fig. 8: ein Beispiel für die Höhenausnutzung eines Lagerplatzes zwischen aufeinander folgenden Stützen eines Lagerregales.

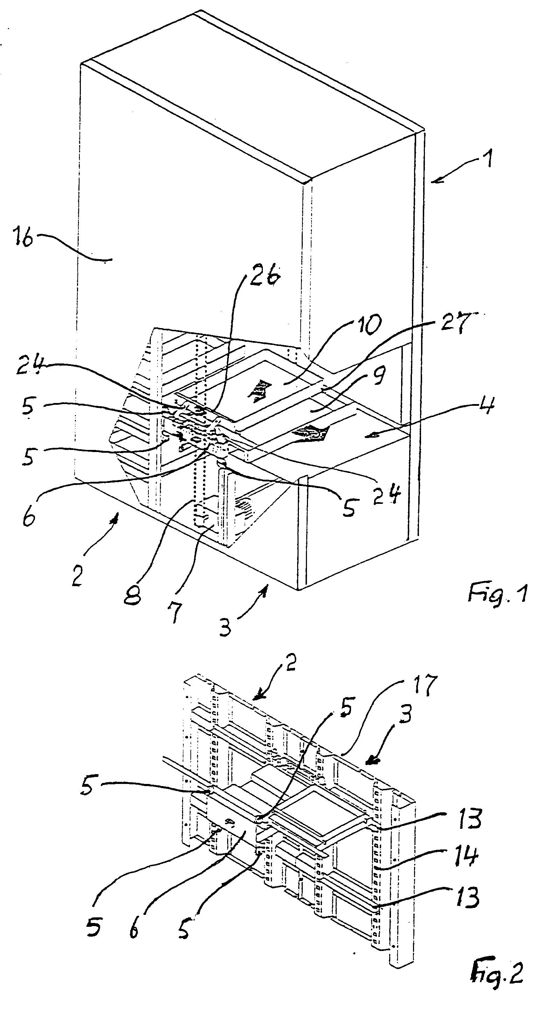

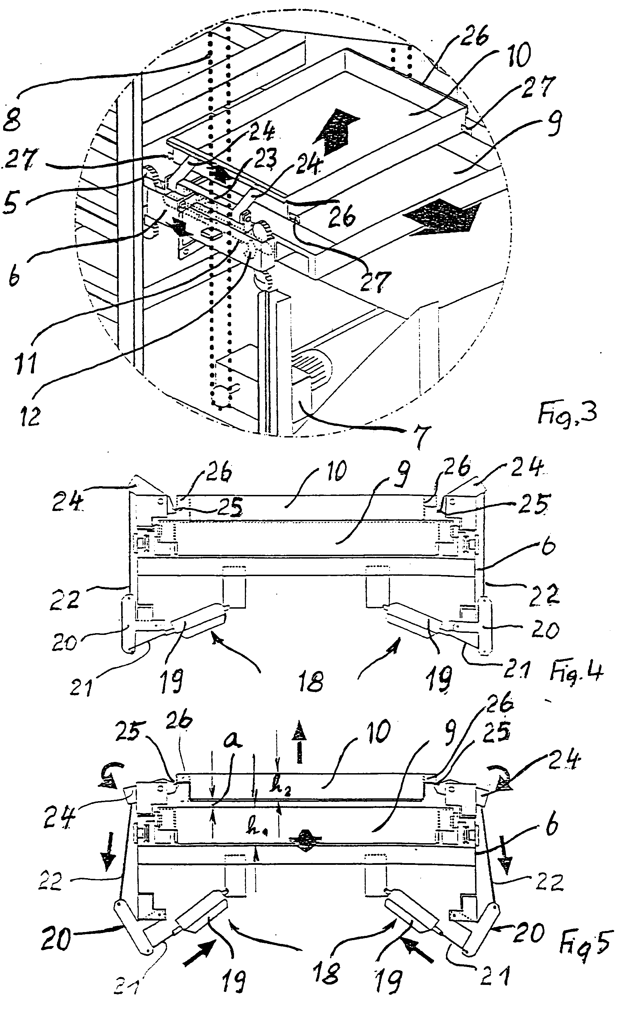

In Fig. 1 ist 1 das Gehäuse eines Lagerregales, das zwei sich gegenüberliegende Lagerplatzsäulen 2 und 3 aufweist, von denen die vordere mit einer eine Beschickungs- und Entnahmestelle 4 bildenden Öffnung versehen ist. Zwischen den Lagerplatzsäulen 2 und 3 ist mittels Rollen 5 vertikal in einem von den Lagerplatzsäulen und den Seitenwänden des Gehäuses 1 begrenzten Schacht verfahrbar eine Ein- und Auslagervorrichtung 6 angeordnet, zu deren Antrieb eine von einem Getriebemotor 7 in Bewegung versetzbare Kette 8 dient. Die Einund Auslagervorrichtung 6 ist in bekannter Weise mit Mitteln versehen, die eine Horizontalverschiebung der auf sie zu überführenden oder aber bereits auf ihr befindlichen Lastträger 9,10 ermöglichen. Zu diesen Mitteln gehört ein in Fig. 3 angedeuteter Antriebsstrang 11 mit Mitnehmern 12.

Die Lastträger 9 und 10 bilden jeweils Lastträgerstapel, die an den übereinander angeordneten Lagerplätzen eingelagert werden. Wie aus Fig. 8 erkennbar, wird der kleinste Abstand A zwischen den jeweils aufeinanderfolgenden Lagerplätzen durch von Schienen gebildete Stützen 13 bestimmt. Die Stützen 13 sind in Löcher 14 von Profilträgern 15 im Bereich der Seitenwände 16,17 des Gehäuses 1 eingehängt.

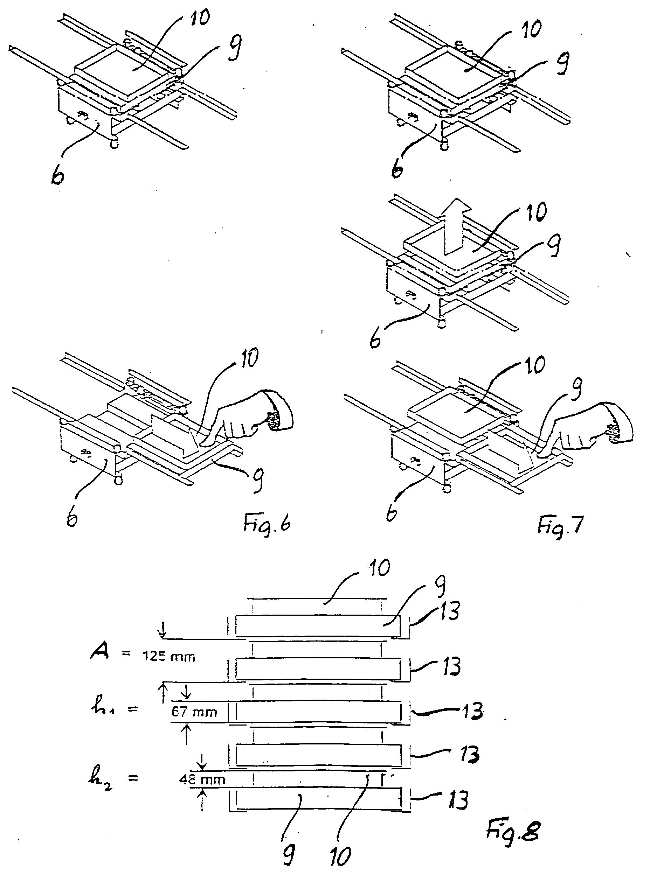

Dadurch, daß in einem Lagerplatz jeweils mehrere Lastträger 9,10 überführbar sind, läßt sich die Lagerfläche der einzelnen Lagerplätze erhöhen. Es ist also insbesondere möglich, das Volumen des durch den kleinstmöglichen Abstand A vorgegebenen Lagerplatzes mehrfach, d.h. im beschriebenen Fall im wesentlichen doppelt, zu nutzen. Das beschriebene Regal eignet sich folglich im besonderen Maße zur Lagerung von Kleinteilen, d.h. von Teilen geringer Höhe. Um sicherzustellen, daß die verbesserte Raumausnutzung des Regales nicht durch einen umständlichen Zugriff zu den einzelnen Lastträgern beeinträchtigt wird, ist die Ein- und Auslagervorrichtung 6 mit einem Hubmechanismus 18 der in den Fig. 4 und 5 dargestellten Art versehen. Durch den Hubmechanismus läßt sich im beschriebenen Ausführungsbeispiel bei Bedarf der Lastträger 10 anheben, um anschließend lediglich den unteren Lastträger 9 horizontal zu verschieben, d.h. an die Beschickungs- und Entnahmestelle 4 zu überführen oder aber von dieser Stelle zurück auf die Ein- und Auslagervorrichtung 6 zu befördern.

Zum Hubmechanismus 18 gehören zwei Linearantriebe 19, die über jeweils eine von einem Schwenkhebel 20 und zwei Zugstangen 21,22 gebildete Gelenkkette mit jeweils zwei durch einen Längsträger 23 miteinander verbundenen Schwenkhebeln 24 in Verbindung stehen. Wie in Fig.5 gezeigt, läßt sich durch die Linearantriebe 19 eine Schwenkbewegung in die Schwenkhebel 24 einleiten und dies mit der Folge, daß die dem Lastträger 10 zugewandten Enden 25 der Schwenkhebel 24 mit leistenförmigen Anschlägen 26 in Eingriff treten, um den Lastträger 10 anzuheben. Beim Anheben geben am Lastträger 10 angeordnete Verriegelungselemente 27 den Lastträger 9 frei und dieser nimmt einen Abstand a gegenüber dem Lastträger 10 ein.

In den Fig. 6 und 7 sind schematisch nochmals die beiden Zugriffsmöglichkeiten, die das beschriebene Lagerregal bezüglich seiner Lastträger 9 und 10 bietet, dargestellt. In Fig. 6 ist der Lastträgerstapel in seiner Gesamtheit, in Fig. 7 dagegen lediglich der untere Lastträger 9 des Lastträgerstapels ausgefahren, nachdem der obere Lastträger 10 angehoben wurde.

Fig. 8 schließlich zeigt eine praxisgerechte Aufteilung des durch aufeinanderfolgende Stützen 13 vorgegebenen Abstandes A zwischen einzelnen Lagerplätzen. Die Fig. 8 macht deutlich, daß die Höhen h 1 und h 2 der trogförmigen Lastträger 9 und 10 nicht gleich sein müssen. Es genügt, daß die Summe h 1 + h 2 + a im dargestellten Beispielsfall kleiner als A ist.

## Patentansprüche

1. Lagerregal mit einer Vielzahl von im Abstand A übereinander angeordneten Paaren von Stützen für Lastträger, die mit Hilfe einer vertikal verfahrbaren Ein- und Auslagervorrichtung von mindestens einer Beschickungs- und Entnahmestelle zu Lagerplätzen des Regales überführbar oder von diesen zur Beschickungs- und Entnahmestelle beförderbar sind, **dadurch gekennzeichnet,** daß es mit Lastträgerstapeln ausgestattet ist, die mehrere übereinander angeordnete Lastträger (9,10) aufweisen, daß die Ein- und Auslagervorrichtung (6) mit einem Hubmechanismus (18) versehen ist, durch den bei Bedarf mindestens ein Lastträger (10) aus einer Position, in der er sich auf einem unterhalb von ihm gelegenen Lastträger (9) des Lastträgerstapels abstützt, in eine Position überführbar ist, in der er einen Abstand a von letzterem einnimmt, und daß die unterhalb des durch den Hubmechanismus angehobenen Lastträgers (10) angeordneten Lastträger (9) unabhängig von dem jeweils angehobenen Lastträger (10) und sich gegebenenfalls weiteren auf diesem abstützenden Lastträgern mittels der Ein- und Auslagervorrichtung (6) durch eine Horizontalbewegung in den Bereich der Beschickungs- und Entnahmestelle (4) oder von dieser auf die Ein- und Auslagervorrichtung (6) überführbar sind.

2. Lagerregal nach Anspruch 1, **dadurch gekennzeichnet,** daß jeweils nur zwei übereinander angeordnete Lastträger (9,10) einen Lastträgerstapel bilden.

3. Lagerregal nach Anspruch 2, **dadurch gekennzeichnet,** daß die Lastträger (9,10) eine Höhe h 1 und h 2 haben und der Abstand A zwischen zwei aufeinanderfolgenden Stützen (13) größer als h 1 + h 2 + a ist.

4. Lagerregal nach einem oder mehreren der Ansprüche 1 bis 3, **dadurch gekennzeichnet,** daß die Stützen (13) von in Löcher (14) im Bereich der Seitenwände (16,17) des Regales einhängbaren Schienen gebildet werden.

5. Lagerregal nach einem oder mehreren der Ansprüche 1 bis 4, **dadurch gekennzeichnet,** daß die Lastträger (9,10) trogartig ausgebildet sind.

6. Lagerregal nach einem oder mehreren der Anspruch 1 bis 5, **dadurch gekennzeichnet,** daß der Hubmechanismus (18) beidseits des jeweils anzuhebenden Lastträgers (10) paarweise angeordnete Schwenkhebel (24) aufweist, deren dem Lastträger (10) zugewandte Enden (25) mit Anschlägen (26) des anzuhebenden Lastträgers (10) in Eingriff bringbar sind, um diesen im Zuge ihrer Schwenkbewegung anzuheben.

7. Lagerregal nach Anspruch 6, **dadurch gekennzeichnet,** daß jeweils zwei auf einer Seite eines Lastträgers (10) angeordnete Schwenkhebel (24) über einen schwenkbar an der Ein- und Auslagervorrichtung (6) gelagerten Längsträger (23) miteinander verbunden sind.

8. Lagerregal nach Anspruch 7, **dadurch gekennzeichnet,** daß in die Längsträger (23) über eine Gelenkkette (20,21,22) mittels eines Linearantriebes (19) eine Schwenkbewegung einleitbar ist.

9. Lagerregal nach einem oder mehreren der Ansprüche 1 bis 8**, dadurch gekennzeichnet,** daß die Lastträger (9,10) eines Lastträgerstapels durch Verriegelungselemente (27) in ihrer Lage zueinander arretierbar sind.

## Claims

1. A storage rack having a multiplicity of pairs of supports, arranged one above the other at a distance A apart, for load carriers which, with the aid of a vertically displaceable storage and retrieval apparatus, can be transferred from at least one charging and removal location to storage locations of the rack or can be conveyed from said storage locations to the charging and removal location, wherein it is equipped with load-carrier stacks which exhibit a plurality of load carriers (9, 10) arranged one above the other, wherein the storage and retrieval apparatus (6) is provided with a lifting mechanism (18) by means of which, if required, at least one load carrier (10) can be transferred from a position in which it is supported on a load-carrier-stack load carrier (9) located beneath it into a position in which it is at a distance a from the latter load carrier, and wherein the load carriers (9) arranged beneath the load carrier (10) raised up by the lifting mechanism can be transferred, independently of the respectively raised-up load carrier (10) and of any further load carriers which may be supported thereon, by means of the storage and retrieval apparatus (6), by way of a horizontal movement, into the region of the charging and removal location (4) or from the latter onto the storage and retrieval apparatus (6).

2. The storage rack as claimed in claim 1, wherein in each case only two load carriers (9, 10) arranged one above the other form a load-carrier stack.

3. The storage rack as claimed in claim 2, wherein the load carriers (9, 10) are of a height h 1 and h 2, and the distance A between two successive supports (13) is more than h 1 + h 2 + a.

4. The storage rack as claimed in one or more of claims 1 to 3, wherein the supports (13) are formed by rails which can be fitted in holes (14) in the region of the side walls (16, 17) of the rack.

5. The storage rack as claimed in one or more of claims 1 to 4, wherein the load carriers (9, 10) are designed in the manner of trays.

6. The storage rack as claimed in one or more of claims 1 to 5, wherein the lifting mechanism (18) exhibits pivot levers (24) which are arranged in pairs on both sides of the load carrier (10) which is to be raised up in each case, it being possible to bring the pivot-lever ends (25) which face the load carrier (10) into engagement with stops (26) of the load carrier (10) to be raised up, in order to raise up the latter during the pivot movement of the pivot levers.

7. The storage rack as claimed in claim 6, wherein in each case two pivot levers (24) arranged on one side of a load carrier (10) are connected to one another via a longitudinal carrier (23) which is mounted pivotably on the storage and retrieval apparatus (6).

8. The storage rack as claimed in claim 7, wherein a pivot movement can be initiated in the longitudinal carriers (23) via a link chain (20, 21, 22), by means of a linear drive (19).

9. The storage rack as claimed in one or more of claims 1 to 8, wherein the load carriers (9, 10) of a load-carrier stack can be secured in their position with respect to one another by locking elements (27).

## Revendications

1. Rayonnage de stockage comportant une multitude de paires de supports pour des plateaux porte-charge, disposées à une distance A les unes au-dessus des autres et pouvant être transférées, au moyen d'un dispositif de rangement et de retrait verticalement mobile, d'au moins un poste de rentrée et de sortie vers des emplacements de stockage du rayonnage, ou de ces derniers vers le poste de rentrée et de sortie, caractérisé en ce qu'il est équipé de piles de plateaux porte-charge, qui comprennent plusieurs plateaux porte-charge superposés (9, 10), en ce que le dispositif (6) de rangement et de retrait est pourvu d'un dispositif élévateur (18) grâce auquel au moins un plateau porte-charge (10) peut être transféré, le cas échéant, d'une position dans laquelle il s'appuie sur un plateau porte-charge (9) situé en dessous de celui-ci dans la pile de plateaux porte-charge, vers une position dans laquelle il se place à une distance "a" de ce plateau, et en ce que les plateaux porte-charge (9) situés en dessous du plateau porte-charge (10) soulevé par le mécanisme élévateur peuvent être transférés, indépendamment du plateau porte-charge soulevé (10) et des autres plateaux porte-charge éventuels s'appuyant sur celui-ci, par un déplacement horizontal effectué au moyen du dispositif (6) de rangement et de retrait, vers la zone du poste de rentrée et de sortie (4), ou depuis celle-ci vers le dispositif (6) de rangement et de retrait.

2. Rayonnage selon la revendication 1, caractérisé en ce que seulement deux plateaux porte-charge superposés (9, 10) constituent respectivement une pile de plateaux porte-charge.

3. Rayonnage selon la revendication 2, caractérisé en ce que les plateaux porte-charge (9, 10) présentent respectivement une hauteur h1 et h2, et en ce que la distance A entre deux supports successifs (13) est supérieure à h1 + h2 + a.

4. Rayonnage selon l'une ou plusieurs des revendications 1 à 3, caractérisé en ce que les supports (13) sont constitués de poutres pouvant être accrochées dans des trous (14) ménagés au niveau des parois latérales (16, 17) du rayonnage.

5. Rayonnage selon l'une ou plusieurs des revendications 1 à 4, caractérisé en ce que les plateaux porte-charge (9, 10) sont réalisés sous forme de bacs.

6. Rayonnage selon l'une ou plusieurs des revendications 1 à 5, caractérisé en ce que le mécanisme élévateur (18) comporte des leviers oscillants (24) disposés par paires des deux côtés du plateau porte-charge respectif à soulever (10), les extrémités (25) des leviers, qui sont tournées face au plateau porte-charge (10), pouvant être amenées en contact avec des butées (26) du plateau porte-charge à soulever (10), de manière à soulever ce dernier au cours de leur mouvement de basculement.

7. Rayonnage selon la revendication 6, caractérisé en ce que respectivement deux leviers oscillants (24) disposés d'un même côté du plateau porte-charge (10) sont reliés l'un à l'autre par l'intermédiaire d'un axe longitudinal (23) logé de façon pivotante dans le dispositif (6) de rangement et de retrait.

8. Rayonnage selon la revendication 7, caractérisé en ce qu'un mouvement de pivotement peut être imprimé aux axes longitudinaux (23), par l'intermédiaire d'une chaîne articulée (20, 21, 22), au moyen d'un moteur linéaire (19).

9. Rayonnage selon l'une ou plusieurs des revendications 1 à 8, caractérisé en ce que les plateaux porte-charge (9, 10) d'une pile de plateaux porte-charge peuvent être verrouillés dans leurs positions relatives au moyen d'éléments de verrouillage (27).
